# FASCICULE DE BREVET EUROPEEN

(11) **EP 4 648 255 B1**
(45) Date de publication et mention de la délivrance du brevet: **04.11.2026**
(21) Numéro de dépôt: 25173455.4
(22) Date de dépôt: 30.04.2025
(51) Int. Cl.: H02J 7/00

(54) **PROCÉDÉ DE COMMANDE D'UN ACTIONNEUR ÉLECTROMÉCANIQUE POUR UN DISPOSITIF D'OCCULTATION ET ACTIONNEUR ÉLECTROMÉCANIQUE ASSOCIÉ**
VERFAHREN ZUR STEUERUNG EINES ELEKTROMECHANISCHEN AKTUATORS FÜR EINE VERDUNKELUNGSVORRICHTUNG UND ELEKTROMECHANISCHER AKTUATOR DAFÜR
METHOD FOR CONTROLLING AN ELECTROMECHANICAL ACTUATOR FOR A DARKENING DEVICE AND ASSOCIATED ELECTROMECHANICAL ACTUATOR

(30) Priorité: 02.05.2024 FR 2404615
(43) Date de publication de la demande: 12.11.2025
(73) Titulaire: Somfy Activites SA, 74300 Cluses (FR)
(72) Inventeur: FERNANDEZ, Cédric, 74300 CLUSES (FR); DEZEUZE, Yoann, 74300 CLUSES (FR)
(74) Mandataire: Lavoix

(56) Documents cités:
- WO-A1-2024/013034
- US-A1- 2006 284 595
- US-A1- 2012 249 084
- US-A1- 2014 292 283
- US-A1- 2020 136 401

## Description

La présente invention concerne un procédé de commande d'un actionneur électromécanique pour un dispositif d'occultation, ainsi qu'un actionneur électromécanique associé.

Un actionneur électromécanique pour un dispositif de fermeture, d'occultation ou de protection solaire, comprend une unité électronique de contrôle, une batterie rechargeable, et un moteur électrique, le moteur électrique étant alimenté par la batterie rechargeable pour entraîner en mouvement un écran du dispositif de fermeture, d'occultation ou de protection solaire. L'unité électronique de contrôle comprend un contrôleur embarqué dans l'actionneur électromécanique adapté pour être connecté à un chargeur intelligent externe à l'actionneur électromécanique par l'intermédiaire d'un bus de communication, et un circuit de charge de la batterie rechargeable adapté pour être connecté au chargeur intelligent par l'intermédiaire d'un bus d'alimentation. Lors du chargement de la batterie rechargeable par le chargeur intelligent, le circuit de charge est alimenté par le chargeur intelligent par l'intermédiaire du bus d'alimentation pour charger la batterie rechargeable, et le contrôleur embarqué communique avec le chargeur intelligent par l'intermédiaire du bus de communication, pour échanger des données. Cependant, si l'échange de données a lieu simultanément au chargement de la batterie rechargeable, il est perturbé, à cause notamment de parasites causés par des perturbations électromagnétiques, qui entraînent une baisse de la qualité des données échangées, voire les rendent illisibles par le contrôleur embarqué et le chargeur intelligent. Cet effet est particulièrement accentué lorsque le courant traversant le bus d'alimentation pour charger la batterie rechargeable est élevé, et/ou la vitesse de communication pour échanger les données traversant le bus de communication est élevée. Des exemples de commande d'actionneurs électromécaniques peuvent être trouvés dans le document WO2024/013034.

Le but de l'invention est alors de permettre l'échange de données en minimisant les perturbations, sans interrompre le chargement de la batterie rechargeable.

A cet effet, l'invention a pour objet un procédé de commande d'un actionneur électromécanique pour un dispositif d'occultation, l'actionneur électromécanique comprenant au moins :
- une unité électronique de contrôle, et
- une batterie rechargeable,
l'unité électronique de contrôle comprenant au moins :
- un contrôleur, le contrôleur étant connecté à un chargeur par l'intermédiaire d'un bus de communication, le chargeur étant externe à l'actionneur électromécanique, et
- un circuit de charge, le circuit de charge étant, d'une part, connecté à la batterie rechargeable et au contrôleur, et, d'autre part, connecté au chargeur par l'intermédiaire d'un bus d'alimentation,
le procédé étant mis en œuvre par l'unité électronique de contrôle, le procédé comprenant au moins :
- une étape de détection d'une connexion du chargeur à l'actionneur électromécanique,
- lorsqu'une connexion du chargeur à l'actionneur électromécanique est détectée, une étape de détermination d'un profil d'alimentation capable d'être fourni par le chargeur, le profil d'alimentation étant caractérisé par une valeur seuil de tension associée à une valeur seuil d'intensité, et
- une étape de commande du chargeur, de sorte que le chargeur alimente le circuit de charge avec le profil d'alimentation déterminé.

Selon l'invention, le procédé comprend, en outre, au moins :
- une première étape de commande du circuit de charge, de sorte que le circuit de charge charge la batterie rechargeable avec une valeur d'intensité d'un courant de charge égale à une première valeur d'intensité pendant une durée prédéterminée, la première valeur d'intensité étant strictement inférieure à la valeur seuil d'intensité, et
- lorsque la durée prédéterminée est écoulée, une deuxième étape de commande du circuit de charge, de sorte que le circuit de charge charge la batterie rechargeable avec une valeur d'intensité du courant de charge égale à une deuxième valeur d'intensité, la deuxième valeur d'intensité étant strictement supérieure à la première valeur d'intensité et inférieure ou égale à la valeur seuil d'intensité.

Grâce à l'invention, le contrôleur embarqué et le chargeur intelligent peuvent échanger des données entre eux, alors même que la batterie rechargeable est en cours de chargement. En effet, pendant la durée prédéterminée, l'intensité du courant de chargement est égale au premier niveau d'intensité et suffisament faible pour limiter les perturbations des échanges de données. La communication est réalisée pendant la durée prédéterminée, afin de limiter la durée pendant laquelle la batterie rechargeable est chargée par un courant de charge d'intensité égale au premier niveau d'intensité, qui entraîne une charge plus lente que lorsque la batterie rechargeable est chargée par un courant de charge d'intensité égale au deuxième niveau d'intensité. Ainsi, la communication entre le contrôleur embarqué et le chargeur intelligent est possible tout en limitant l'allongement de la durée de chargement.

Suivant d'autres aspects avantageux de l'invention, le procédé comprend une ou plusieurs des caractéristiques suivantes, prises isolément ou suivant toutes les combinaisons techniquement possibles.

Le procédé comprend, en outre, une étape de communication avec le chargeur par l'intermédiaire du bus de communication, de sorte à mettre en œuvre un échange de données entre le contrôleur et le chargeur, l'étape de communication étant mise en œuvre pendant **la** durée prédéterminée.

Le bus de communication est un bus de communication haute vitesse, l'échange de données étant mis en œuvre à une vitesse comprise dans une plage s'étendant entre 200 kHz et 400 kHz, en particulier à une vitesse de 300 kHz.

Les données échangées entre le contrôleur et le chargeur, lors de l'étape de communication, sont des données de type PowerDelivery du standard USB PowerDelivery.

L'étape de détection comprend au moins :
- une sous-étape de surveillance de la présence d'un signal d'alimentation sur le bus d'alimentation,
- au cours de la sous-étape de surveillance, une première sous-étape de détection de la présence du signal d'alimentation sur le bus d'alimentation,
- en réponse à la détection de la présence du signal d'alimentation, une première sous-étape de communication du circuit de charge au contrôleur d'au moins une information indiquant la présence du signal d'alimentation, et
- en réponse à la réception de l'information indiquant la présence du signal d'alimentation, une deuxième sous-étape de détection, par le contrôleur, de la présence d'une valeur de résistance sur le bus de communication,
la sous-étape de surveillance et première sous-étape de détection étant mises en œuvre par le circuit de charge, et la deuxième sous-étape de détection étant mise en œuvre par le contrôleur.

L'étape de détermination du profil d'alimentation comprend, en outre, au moins :
- une sous-étape de réception d'une liste de profils d'alimentation, la liste de profils d'alimentation étant émise par le chargeur ; et
- une sous-étape de sélection du profil d'alimentation parmi la liste de profils d'alimentation,
les sous-étapes de réception et de sélection étant mises en œuvre par le contrôleur.

Lorsque le chargeur est connecté à l'actionneur électromécanique, le chargeur alimente automatiquement le circuit de charge avec un profil d'alimentation minimum, le profil d'alimentation minimum étant distinct et strictement inférieur au profil d'alimentation déterminé lors de l'étape de détermination,
et, lorsque les étapes de détection et de détermination sont mises en œuvre, le circuit de charge n'est pas commandé pour charger la batterie rechargeable.

L'invention concerne également un actionneur électromécanique pour un dispositif d'occultation, l'actionneur électromécanique comprend au moins :
- une unité électronique de contrôle, et
- une batterie rechargeable,
l'unité électronique de contrôle comprenant au moins :
- un contrôleur, le contrôleur étant adapté pour être connecté à un chargeur par l'intermédiaire d'un bus de communication, le chargeur étant externe à l'actionneur électromécanique, et
- un circuit de charge, le circuit de charge étant d'une part connecté à la batterie rechargeable et au contrôleur, et d'autre part adapté pour être connecté au chargeur par l'intermédiaire d'un bus d'alimentation.

Selon l'invention, l'unité électronique de contrôle est configurée pour mettre en œuvre les étapes du procédé.

Suivant d'autres aspects avantageux de l'invention, l'actionneur électromécanique comprend une ou plusieurs des caractéristiques suivantes, prises isolément ou suivant toutes les combinaisons techniquement possibles.

L'actionneur électromécanique comprend, en outre, un connecteur, et le connecteur comprend au moins :
- une broche de communication, la broche de communication étant connectée au contrôleur par l'intermédiaire du bus de communication, et
- une broche d'alimentation, la broche d'alimentation étant connectée au circuit de charge par l'intermédiaire du bus d'alimentation.

Le connecteur est un connecteur bus série universel de type C.

L'actionneur électromécanique comprend, en outre, un moteur électrique, le moteur électrique étant relié électriquement à la batterie rechargeable de sorte à être alimenté en fonctionnement par la batterie rechargeable.

L'invention apparaîtra plus clairement à la lecture de la description qui va suivre, donnée uniquement à titre d'exemple non limitatif, et faite en référence aux dessins dans lesquels :
- [Fig. 1] la figure 1 est une vue d'un dispositif d'occultation selon un mode de réalisation de l'invention ;
- [Fig. 2] la figure 2 est une vue d'un actionneur électromécanique selon un mode de réalisation de l'invention ;
- [Fig. 3] la figure 3 est une vue d'un support de couple d'un actionneur électromécanique selon un mode de réalisation de l'invention ;
- [Fig. 4] la figure 4 est un schéma électrique de l'actionneur électromécanique selon un mode de réalisation de l'invention ; et
- [Fig. 5] la figure 5 est un logigramme d'un procédé de commande d'un actionneur électromécanique selon un mode de réalisation de l'invention.

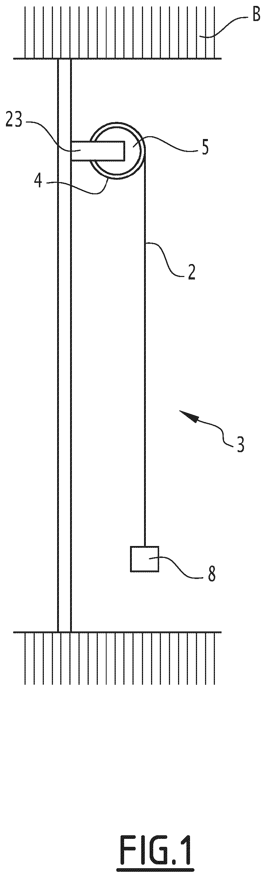

On décrit tout d'abord, en référence à la **figure 1****,** un dispositif d'occultation ou de protection solaire 3. Le dispositif d'occultation, ou de protection solaire est par la suite appelé « dispositif d'occultation ».

Le dispositif d'occultation 3 peut être un store, notamment un store comprenant une toile enroulable, ou une toile plissée ou alvéolée, ou un store avec des lames orientables. La présente invention s'applique à tous les types de dispositif d'occultation.

Le dispositif d'occultation 3 comprend un dispositif d'entraînement motorisé 5 d'un écran 2, le dispositif d'entraînement motorisé 5 étant positionné au niveau d'une ouverture d'un bâtiment B pour déplacer l'écran 2 par rapport à l'ouverture du bâtiment B. Le dispositif d'occultation 3 comprend l'écran 2.

L'écran 2 est par exemple formé d'une toile enroulable, ou d'une toile plissée ou alvéolée, ou encore formé à partir de lames orientables.

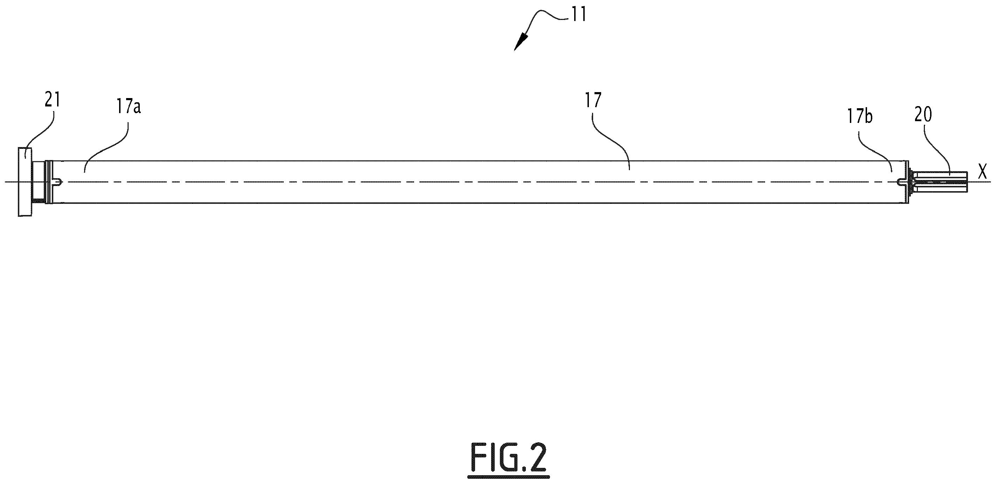

Le dispositif d'entraînement motorisé 5 comprend, en outre, un actionneur électromécanique 11, illustré à la **figure 2****.**

Le dispositif d'occultation 3 comprend, en outre, un tube d'enroulement 4. L'écran 2 est enroulable sur le tube d'enroulement 4. En outre, le tube d'enroulement 4 est agencé de sorte à être entraîné en rotation par l'actionneur électromécanique 11.

Ainsi, l'écran 2 du dispositif d'occultation 3 est enroulé sur le tube d'enroulement 4 ou déroulé autour de celui-ci, le tube d'enroulement 4 étant entraîné par le dispositif d'entraînement motorisé 5, en particulier par l'actionneur électromécanique 11.

De cette manière, l'écran 2 est mobile entre une position enroulée, en particulier haute, et une position déroulée, en particulier basse, et inversement.

L'écran 2 du dispositif d'occultation 3 est un écran d'occultation et/ou de protection solaire, s'enroulant et se déroulant autour du tube d'enroulement 4, dont le diamètre intérieur est supérieur au diamètre externe de l'actionneur électromécanique 11, de sorte que l'actionneur électromécanique 11 peut être inséré dans le tube d'enroulement 4, lors de l'assemblage du dispositif d'occultation 3.

Le dispositif d'occultation 3 comprend, en outre, une barre de charge 8 pour exercer une tension sur l'écran 2. Une première extrémité de l'écran 2, en particulier l'extrémité supérieure de l'écran 2, dans une configuration assemblée du dispositif d'occultation 3, est fixée au tube d'enroulement 4. En outre, une deuxième extrémité de l'écran 2, en particulier l'extrémité inférieure de l'écran 2, dans la configuration assemblée du dispositif d'occultation 3, est fixée à la barre de charge 8.

L'actionneur électromécanique 11, en particulier de type tubulaire, permet de mettre en rotation le tube d'enroulement 4 autour d'un axe de rotation X, de sorte à déplacer, en particulier dérouler ou enrouler, l'écran 2 du dispositif d'occultation 3.

Dans un état monté du dispositif d'occultation 3, l'actionneur électromécanique 11 est inséré dans le tube d'enroulement 4.

Le dispositif d'occultation 3 comprend un dispositif de maintien 23. Le dispositif de maintien 23 peut comprendre deux supports. Les supports sont disposés chacun à une extrémité du tube d'enroulement 4, en particulier dans la configuration assemblée du dispositif d'occultation 3. Ainsi, le tube d'enroulement 4 est maintenu par l'intermédiaire des supports. Les supports permettent de lier mécaniquement le dispositif d'occultation 3 à la structure du bâtiment B, notamment à un mur du bâtiment B.

On décrit à présent, en référence aux **figures 2** à **4****,** l'actionneur électromécanique 11.

L'actionneur électromécanique 11 comprend une unité électronique de contrôle 15, un moteur électrique 16, et une batterie rechargeable 18. L'unité électronique de contrôle 15 est connectée, d'une part, à la batterie rechargeable 18, et, d'autre part, au moteur électrique 16.

L'actionneur électromécanique 11 comprend, en outre, un carter 17, en particulier tubulaire et creux. Le moteur électrique 16 est monté à l'intérieur du carter 17, en particulier dans une configuration assemblée de l'actionneur électromécanique 11.

La batterie rechargeable 18 est montée à l'intérieur du carter 17, en particulier dans la configuration assemblée de l'actionneur électromécanique 11.

En variante, non représentée sur les figures, la batterie rechargeable 18 est externe à l'actionneur électromécanique 11, la batterie rechargeable 18 étant dans ce cas connectée à l'unité électronique de contrôle 15 par l'intermédiaire d'un câble d'alimentation. Le carter 17 comprend une première extrémité 17a et une deuxième extrémité 17b. La deuxième extrémité 17b est opposée à la première extrémité 17a. Ici, le carter 17 de l'actionneur électromécanique 11 est de forme cylindrique, notamment de révolution autour de l'axe de rotation X, et est ouvert à chacune de ses extrémités 17a, 17b.

L'actionneur électromécanique 11 comprend, en outre, un arbre de sortie 20. L'arbre de sortie 20 est disposé, autrement dit est configuré pour être disposé, du côté de la deuxième extrémité 17b du carter 17, en particulier dans la configuration assemblée de l'actionneur électromécanique 11.

L'actionneur électromécanique 11 comprend, en outre, un réducteur. Le réducteur est accouplé, autrement dit est configuré pour être accouplé, avec le moteur électrique 16 dans la configuration assemblée de l'actionneur électromécanique 11.

L'actionneur électromécanique 11 comprend, en outre, un frein. Le frein est configuré pour freiner et/ou pour bloquer en rotation l'arbre de sortie 20, de sorte à réguler la vitesse de rotation du tube d'enroulement 4, lors d'un déplacement de l'écran 2, et à maintenir bloqué le tube d'enroulement 4, lorsque le moteur électrique 16 est désactivé électriquement.

Le réducteur et, éventuellement, le frein sont montés à l'intérieur du carter 17 de l'actionneur électromécanique 11, en particulier dans la configuration assemblée de l'actionneur électromécanique 11.

L'actionneur électromécanique 11 comprend, en outre, une couronne, autrement dit un manchon. La couronne est configurée pour être disposée, autrement dit est disposée, au niveau de la première extrémité 17a du carter 17, en particulier dans la configuration assemblée de l'actionneur électromécanique 11.

La couronne forme, autrement dit est configurée pour former ou constituer, un palier de guidage en rotation du tube d'enroulement 4, autour du carter 17 de l'actionneur électromécanique 11, en particulier dans une configuration assemblée du dispositif d'entraînement motorisé 5, et, par conséquent, du dispositif d'occultation 3.

Le tube d'enroulement 4 est entraîné en rotation autour de l'axe de rotation X et du carter 17 de l'actionneur électromécanique 11 en étant soutenu par l'intermédiaire de deux liaisons pivot. La première liaison pivot est réalisée au niveau d'une première extrémité du tube d'enroulement 4 au moyen de la couronne disposée autour de la première extrémité 17a du carter 17 de l'actionneur électromécanique 11. La couronne permet ainsi de réaliser un palier. La deuxième liaison pivot est réalisée au niveau d'une deuxième extrémité du tube d'enroulement 4 opposée à la première extrémité.

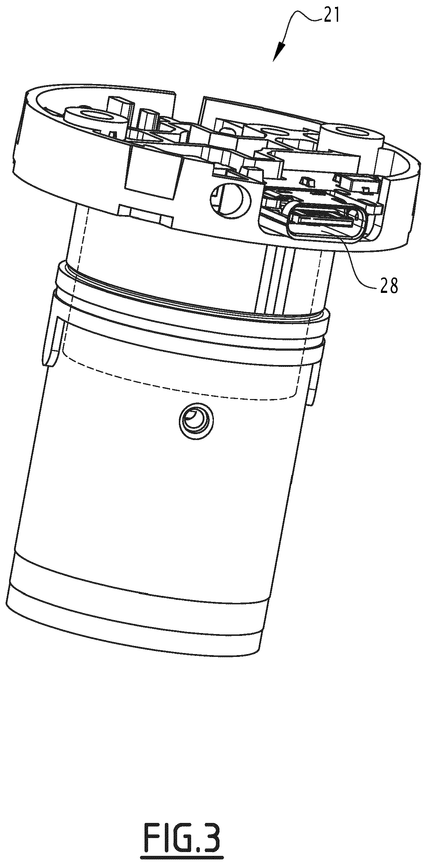

L'actionneur électromécanique 11 comprend, en outre, un support de couple 21, pouvant également être appelé « tête d'actionneur » ou « point fixe ». Un mode de réalisation du support de couple 21 est illustré à la **figure 3****.**

Ici, le support de couple 21 est disposé au niveau de la première extrémité 17a du carter 17 de l'actionneur électromécanique 11, en particulier dans la configuration assemblée de l'actionneur électromécanique 11.

Le support de couple 21 de l'actionneur électromécanique 11 est configuré pour fixer l'actionneur électromécanique 11 sur le dispositif de maintien 23, en particulier sur l'un des supports.

Ainsi, le support de couple 21 permet de reprendre les efforts exercés par l'actionneur électromécanique 11, en particulier le couple exercé par l'actionneur électromécanique 11, par rapport à la structure du bâtiment B. Le support de couple 21 permet avantageusement de reprendre, en outre, des efforts exercés par le tube d'enroulement 4, notamment le poids du tube d'enroulement 4, de l'actionneur électromécanique 11 et de l'écran 2, et d'assurer la reprise de ces efforts par la structure du bâtiment B.

Le support de couple 21 est en saillie au niveau de la première extrémité 17a du carter 17 de l'actionneur électromécanique 11.

Ainsi, une première partie du support de couple 21 est disposée à l'intérieur du carter 17 et une deuxième partie du support de couple 21 est disposée à l'extérieur du carter 17.

Le support de couple 21 obture, autrement dit est configuré pour obturer, la première extrémité 17a du carter 17, en particulier dans la configuration assemblée de l'actionneur électromécanique 11.

Par ailleurs, le support de couple 21 de l'actionneur électromécanique 11 peut permettre de supporter au moins une partie de l'unité électronique de contrôle 15.

Le support de couple 21 est configuré pour être fixé, autrement dit est fixé, au carter 17 au moyen d'un ou plusieurs éléments de fixation, non représentés, en particulier dans la configuration assemblée de l'actionneur électromécanique 11. Le ou les éléments de fixation peuvent être, notamment, des bossages, des vis de fixation, des éléments de fixation par encliquetage élastique, des nervures emmanchées dans des échancrures ou une combinaison de ces différents éléments de fixation.

Dans un premier mode de réalisation, non représenté, la couronne est disposée, autrement dit est configurée pour être disposée, autour d'une partie du carter 17, en particulier dans la configuration assemblée de l'actionneur électromécanique 11. Dans ce cas, la couronne est montée libre en rotation autour du carter 17.

En variante, non représentée, la couronne est disposée, autrement dit est configurée pour être disposée, autour du support de couple 21, en particulier dans la configuration assemblée de l'actionneur électromécanique 11. Dans ce cas, la couronne est montée libre en rotation autour du support de couple 21.

Dans une autre variante, non représentée, la couronne est disposée, autrement dit est configurée pour être disposée, d'une part, autour du support de couple 21 et, d'autre part, autour d'une partie du carter 17, en particulier dans la configuration assemblée de l'actionneur électromécanique 11. Dans un tel cas, la couronne peut être montée libre en rotation, d'une part, autour du support de couple 21 et, d'autre part, autour du carter 17.

L'arbre de sortie 20 de l'actionneur électromécanique 11 est disposé à l'intérieur du tube d'enroulement 4 et au moins en partie à l'extérieur du carter 17 de l'actionneur électromécanique 11.

Ici, une extrémité de l'arbre de sortie 20 est en saillie par rapport au carter 17 de l'actionneur électromécanique 11, en particulier par rapport à la deuxième extrémité 17b du carter 17.

Avantageusement, l'arbre de sortie 20 de l'actionneur électromécanique 11 est configuré pour entraîner en rotation, autrement dit entraîne en rotation, un élément de liaison, également appelé « roue ». Cet élément de liaison est relié au tube d'enroulement 4, en particulier dans la configuration assemblée du dispositif d'occultation 3.

Lors de la mise en fonctionnement de l'actionneur électromécanique 11, le moteur électrique 16 et le réducteur entraînent en rotation l'arbre de sortie 20. En outre, l'arbre de sortie 20 de l'actionneur électromécanique 11 entraîne en rotation le tube d'enroulement 4 par l'intermédiaire de l'élément de liaison. Ainsi, le tube d'enroulement 4 entraîne en rotation l'écran 2 du dispositif d'occultation 3, de sorte à couvrir ou découvrir l'ouverture du bâtiment B.

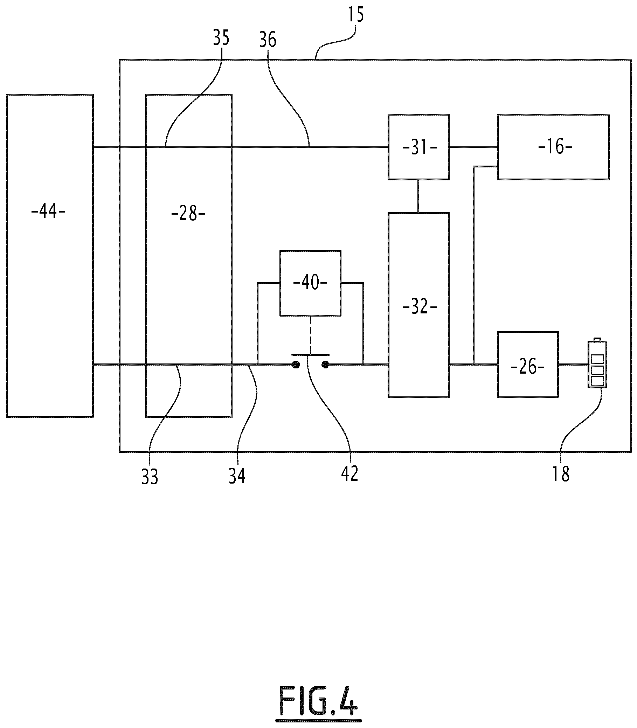

On décrit à présent, en référence à la **figure 4****,** l'unité électronique de contrôle 15 de l'actionneur électromécanique 11.

L'unité électronique de contrôle 15 est disposée, autrement dit est intégrée, à l'intérieur du carter 17 de l'actionneur électromécanique 11.

L'unité électronique de contrôle 15 comprend un contrôleur 31 embarqué dans l'actionneur électromécanique 11, et un circuit de charge 32 de la batterie rechargeable 18.

Le circuit de charge 32 est connecté d'une part au contrôleur 31, et d'autre part à la batterie rechargeable 18.

L'unité électronique de contrôle 15 comprend au moins une carte électronique sur laquelle sont assemblés le circuit de charge 32 et le contrôleur 31, la carte électronique étant disposée, autrement dit intégrée, à l'intérieur du carter 17 de l'actionneur électromécanique 11 dans la configuration assemblée de l'actionneur électromécanique 11.

La batterie rechargeable 18 est configurée pour alimenter, autrement dit alimente, en énergie électrique l'actionneur électromécanique 11, en particulier l'unité électronique de contrôle 15 et le moteur électrique 16.

Avantageusement, la batterie rechargeable 18 est de type Ni-MH, ou de type Lithiumion.

Le contrôleur 31 est par exemple un microcontrôleur. Ici, et à titre d'exemple nullement limitatif, le contrôleur 31 est un microcontrôleur STM32G0B1CE.

Dans un mode de réalisation du dispositif d'entraînement motorisé 5, le contrôleur 31 contient en particulier une combinaison de composants logiciels, couramment appelée « pile » (traduit du terme anglo-saxon « stack ») USB Power Delivery, également appelée pile USB-PD.

L'actionneur électromécanique 11 comprend avantageusement un module de gestion 26 de la batterie rechargeable 18, connecté entre la batterie rechargeable 18 et le circuit de charge 32.

L'actionneur électromécanique 11 comprend avantageusement un connecteur 28. Le connecteur 28 comprend une broche d'alimentation 33, connectée au circuit de charge 32 par un bus d'alimentation 34, et une broche de communication 35 connectée au contrôleur 31 par un bus de communication 36, visibles à la **figure 4****.** Le connecteur 28 est avantageusement un connecteur bus série universel, ou connecteur USB (de l'anglais « Universal Serial Bus ») de type C, aussi dit USB-C.

Avantageusement, les bus d'alimentation 34 et de communication 36 sont inclus dans une même nappe de câbles plats flexibles, aussi dite nappe FFC, de l'anglais « Flexible Flat Cable ». La nappe FFC est par exemple d'au moins 1cm de long, et les câbles inclus dans la nappe FFC ne sont pas blindés.

Avantageusement, l'actionneur électromécanique 11 comprend également un module de protection 40. Dans l'exemple de la **figure 4****,** le module de protection 40 est connecté en parallèle d'un interrupteur 42 localisé sur le bus d'alimentation 34. Le module de protection 40 est configuré pour commander l'interrupteur 42. Lorsque l'interrupteur 42 est ouvert, la connexion entre la broche d'alimentation 33 et le circuit de charge 32 est interrompue.

Un chargeur intelligent 44, représenté à la **figure 4****,** est configuré pour être connecté à l'actionneur électromécanique 11. Le chargeur intelligent 44 est externe à l'actionneur électromécanique 11.

Le chargeur intelligent 44 est par exemple un chargeur intelligent connecté à une source d'alimentation en énergie électrique, par exemple au secteur, ou est une unité de puissance auxiliaire, par exemple une autre batterie externe à l'actionneur électromécanique 11 permettant de recharger des appareils électroniques sans utiliser de prise électrique, l'unité de puissance auxiliaire étant dans ce cas couramment appelée « Power Bank ».

Le chargeur intelligent 44 comprend des éléments matériels et logiciels adaptés pour communiquer avec le contrôleur 31 de l'actionneur électromécanique 11 par l'intermédiaire du bus de communication 36.

De manière générale, le chargeur intelligent 44 est configuré par défaut pour alimenter le bus d'alimentation 34 avec un profil d'alimentation minimum PDO_min. Le chargeur intelligent 44 est, en outre, capable de fournir, autrement dit est configuré pour fournir, une liste de profils d'alimentation PDO_N via le bus de communication 36. Le chargeur intelligent 44 est, en outre, configuré pour négocier avec le contrôleur 31, via le bus de communication 36, un profil d'alimentation PDO parmi la liste de profils d'alimentation PDO_N. En d'autres termes, le chargeur intelligent 44 est configuré pour fournir, sur commande du contrôleur 31, un profil d'alimentation PDO sélectionné par le contrôleur 31 parmi la la liste de profils d'alimentation PDO_N.

De manière générale et au sens de l'invention, un profil d'alimentation est caractérisé par une valeur seuil de tension U associée à une valeur seuil d'intensité d'un courant I. Le profil d'alimentation est couramment noté U/I, par exemple 5V/500mA, 6V/2A, 15V/1A, etc.

Selon un mode de réalisation du chargeur intelligent 44, le chargeur intelligent 44 comprend des éléments matériels et logiciels compatibles avec, autrement dit configurés pour mettre en œuvre, la norme « USB Power Delivery » également appelée « USB-PD », en particulier la norme « USB Power Delivery 3.0 », également appelée « USB-PD 3.0 ».

Selon un mode de réalisation du chargeur intelligent 44, le chargeur intelligent 44 est une station de charge intelligente configurée pour charger la batterie rechargeable 18 de l'actionneur électromécanique 11, et pour configurer l'actionneur électromécanique 11, ou mettre à jour des éléments logiciels de l'unité électronique de contrôle 15 de l'actionneur électromécanique 11, ou configurer l'actionneur électromécanique 11 et mettre à jour des éléments logiciels de l'unité électronique de contrôle 15 de l'actionneur électromécanique 11. Dans ce mode de réalisation, la station de charge intelligente comprend des éléments matériels et logiciels adaptés pour communiquer au contrôleur 31, via le bus de communication 36, des données de configuration de l'actionneur électromécanique, ou des données de mise à jour des éléments logiciels de l'unité électronique de contrôle 15, ou des données de configuration de l'actionneur électromécanique 11 et de mise à jour des éléments logiciels de l'unité électronique de contrôle 15.

De manière avantageuse, l'actionneur électromécanique 11 est configuré pour être connecté au chargeur intelligent 44 par le connecteur 28. Dans le cas où le connecteur 28 est un connecteur USB-C, le chargeur intelligent 44 est un chargeur USB-C muni de la fonctionnalité « Power Delivery ».

Le contrôleur 31 est configuré pour commander le circuit de charge 32, et pour charger la batterie rechargeable 18 à partir du chargeur intelligent 44.

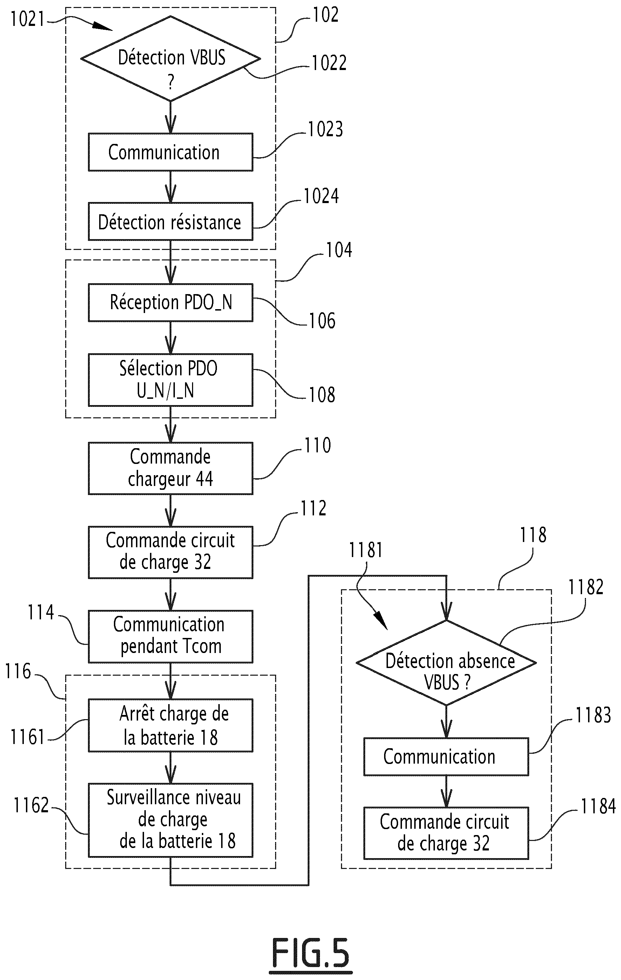

On décrit à présent, en référence à la **figure 5****,** un procédé de commande de l'actionneur électromécanique 11. Le procédé est mis en œuvre par l'unité électronique de contrôle 15, au moins certaines des étapes du procédé étant mises en œuvre par le contrôleur 31.

Le procédé de commande comprend une étape de détection 102 d'une connexion du chargeur intelligent 44 à l'actionneur électromécanique 11.

Avantageusement, la détection de la connexion du chargeur intelligent 44 à l'actionneur électromécanique 11 est effectuée en détectant la connexion du chargeur intelligent 44 au connecteur 28.

Avantageusement, lorsque le chargeur intelligent 44 est connecté à l'actionneur électromécanique 11, le chargeur intelligent 44 alimente automatiquement le circuit de charge 32, via le bus d'alimentation 34, avec un profil d'alimentation minimum PDO_min. Autrement dit, le chargeur intelligent 44 fournit par défaut, autrement dit est configuré pour fournir par défaut, un profil d'alimentation minimum PDO_min via le bus d'alimentation 34.

Le profil d'alimentation minimum PDO_min est caractérisé par une valeur seuil de tension minimum U_min associé à une valeur seuil d'intensité I_min d'un courant. Dans un mode de réalisation du chargeur intelligent 44, le profil d'alimentation minimum PDO_min est caractérisé par une valeur seuil de tension minimum U_min égale à 5 volts associée à une valeur seuil d'intensité minimum I_min égale à 500 milliampères, le profil d'alimentation minimum PDO_min étant dans ce cas noté 5V/500mA.

Avantageusement, l'étape de détection 102 comprend au moins :
- une sous-étape de surveillance 1021 de la présence d'un signal d'alimentation VBUS sur le bus d'alimentation 34,
- au cours de la sous-étape de surveillance 1021, une première sous-étape de détection 1022 de la présence du signal d'alimentation VBUS sur le bus d'alimentation 34,
- en réponse à la détection de la présence du signal d'alimentation VBUS, une première sous-étape de communication 1023 du circuit de charge 32 au contrôleur 31 d'au moins une information indiquant la présence du signal d'alimentation VBUS, et
- en réponse à la réception de l'information indiquant la présence du signal d'alimentation VBUS, une deuxième sous-étape de détection 1024, par le contrôleur 31, de la présence d'une valeur de résistance sur le bus de communication 36.

Les sous-étape de surveillance 1021 et première sous-étape de détection 1022 sont mises en œuvre par le circuit de charge 32, et la deuxième sous-étape de détection 1024 est mise en œuvre par le contrôleur 31.

Avantageusement, lors de la mise en œuvre de l'étape de détection 102, le signal d'alimentation VBUS est formé par le chargeur intelligent 44 à partir du profil d'alimentation minimum PDO_min.

Ainsi, l'étape de détection 102 permet au contrôleur 31 d'être informé par l'intermédiaire du circuit de charge 32 de la présence du signal d'alimentation VBUS sur le bus d'alimentation 34, et en réponse de détecter la présence de la valeur de résistance sur le bus de communication 36, la présence de la valeur de résistance indiquant au contrôleur 31 la possibilité d'échanger des messages avec le chargeur intelligent 44 par l'intermédiaire du bus de communication 36.

Lorsqu'une connexion du chargeur intelligent 44 à l'actionneur électromécanique 11 est détectée, le procédé de commande comprend, en outre, une étape de détermination 104 d'un profil d'alimentation PDO capable d'être fourni par le chargeur intelligent 44. Le profil d'alimentation PDO est caractérisé par une valeur seuil de tension U_N associée à une valeur seuil d'intensité I_N d'un courant, et est noté U_N/I_N.

Avantageusement, le profil d'alimentation minimum PDO_min est distinct et strictement inférieur au profil d'alimentation PDO déterminé lors de l'étape de détermination 104. Autrement dit, la valeur du seuil de tension minimum U_min est distincte et strictement inférieure à la valeur du seuil de tension U_N déterminé lors de l'étape de détermination 104, et la valeur du seuil d'intensité minimum I_min est distincte et strictement inférieure à la valeur du seuil d'intensité I_N déterminé lors de l'étape de détermination 104.

Avantageusement, l'étape de détermination 104 comprend, en outre, au moins :
- une sous-étape de réception 106, par le contrôleur 31, d'une liste de profils d'alimentation PDO_N, la liste de profils d'alimentation PDO_N étant émise par le chargeur intelligent 44, et
- une sous-étape de sélection 108, par le contrôleur 31, du profil d'alimentation PDO parmi la liste de profils d'alimentation PDO_N.

Ici, et tel que décrit précédemment, la liste de profils d'alimentation PDO_N comprend une pluralité de profils d'alimentation PDO1, PDO2, ..., PDON capables d'être fournis par le chargeur intelligent 44. Une telle liste comprend, par exemple, les profils d'alimentation suivants : 5V/500mA, 6V/2A, 15V/1A, et peut comprendre des profils supplémentaires ou différents.

Avantageusement, le profil sélectionné lors de la sous-étape de sélection 108 est adapté pour charger la batterie rechargeable 18 par l'intermédiaire du circuit de charge 20.

Avantageusement, la liste de profils d'alimentation PDO_N est transmise par le chargeur intelligent 44 au contrôleur 31 via la broche de communication 35 et le bus de communication 36.

Avantageusement, le profil d'alimentation PDO sélectionné lors de la sous-étape de sélection 108 est sélectionné par rapport à un profil d'alimentation prédéterminé, le profil d'alimentation prédéterminé étant enregistré dans une mémoire du contrôleur 31. Le profil d'alimentation prédéterminé est, par exemple, choisi par un constructeur de l'actionneur électromécanique 11.

Avantageusement, le profil d'alimentation PDO sélectionné lors de l'étape de sélection 108 est égal à 15V/1A, ce profil d'alimentation permettant de charger efficacement la batterie rechargeable 18 de l'actionneur électromécanique 11.

En variante, le profil d'alimentation PDO sélectionné lors de la sous-étape de sélection 108 est sélectionné dans la liste de profils d'alimentation PDO_N par comparaison avec un profil d'alimentation prédéterminé enregistré dans une mémoire du contrôleur 31, de sorte à présenter la plus grande similarité avec le profil d'alimentation prédéterminé. Par exemple, le profil d'alimentation sélectionné est celui qui a la tension la plus proche de la tension du profil d'alimentation prédéterminé, ou l'intensité la plus proche du profil d'alimentation prédéterminé. Dans un autre exemple, la similarité entre les profils d'alimentation de la liste de profils d'alimentation PDO_N et le profil d'alimentation prédéterminé est calculée à la fois en fonction de la valeur seuil de tension et de la valeur seuil d'intensité des profils d'alimentation.

En variante, une liste de profils d'alimentation autorisés, classés par ordre de priorité, est enregistrée au préalable dans une mémoire du contrôleur 31, par exemple lors de la fabrication de l'actionneur électromécanique 11, et le contrôleur 31 sélectionne dans la liste de profils d'alimentation PDO_N fournis par le chargeur intelligent 44 un profil d'alimentation PDO dont la priorité est la plus élevée.

Avantageusement, lorsque les étapes de détection 102 et de détermination 104 sont mises en œuvre, le circuit de charge 32 n'est pas commandé pour charger la batterie rechargeable 18. Ainsi, la batterie rechargeable 18 n'est pas chargée par le circuit de charge 20 tant que le contrôleur 31 n'a pas sélectionné un profil d'alimentation adapté pour charger la batterie rechargeable 18.

Le procédé de commande comprend, en outre, une étape de commande 110 du chargeur intelligent 44, de sorte que le chargeur intelligent 44 alimente le circuit de charge 32 avec le profil d'alimentation PDO déterminé lors de l'étape de détermination 104, par exemple avec le profil d'alimentation 15V/1A. Lors de l'étape de commande 110, le **contrôleur** 31 communique au chargeur intelligent 44 le profil d'alimentation PDO déterminé, via le bus de communication 36 et la broche de communication 35.

Une fois que l'étape de commande 110 est exécutée, autrement dit une fois que le contrôleur 31 a commandé le chargeur intelligent 44 pour alimenter le circuit de charge 20 avec le profil d'alimentation PDO déterminé, le contrôleur 31 met en œuvre une première étape de commande 112 du circuit de charge 32, pour que le circuit de charge 32 charge la batterie rechargeable 18 avec une valeur d'intensité d'un courant de charge égale à une première valeur d'intensité I_1 pendant une durée prédéterminée Tcom, la première valeur d'intensité I_1 étant strictement inférieure à la valeur seuil d'intensité I_N. Ainsi, le circuit de charge 32 charge la batterie rechargeable 18 pendant la durée prédéterminée Tcom avec une intensité de courant inférieure à la valeur d'intensité de courant du profil d'alimentation PDO commandé au chargeur intelligent 44 par le contrôleur 31 lors de l'étape de commande 110. De cette manière, le courant traversant le bus d'alimentation 34 pendant la durée prédéterminée Tcom est minimisé, sans pour autant être nul, permettant ainsi de minimiser des perturbations électromagnétiques entre le bus d'alimentation 34 et le bus de communication 36 tout en commençant à charger lentement la batterie rechargeable 18. Par exemple, la première valeur d'intensité I_1 est égale à 100mA.

Avantageusement, la durée prédéterminée Tcom est calculée à partir de l'instant où le circuit de charge 32 est alimenté par le chargeur intelligent 44 avec le profil d'alimentation PDO en réaction à l'étape de commande 110 du chargeur intelligent 44. La durée prédéterminée Tcom est avantageusement de l'ordre de quelques minutes, par exemple deux minutes.

Avantageusement, le procédé de commande comprend, en outre, une étape de communication 114, pendant la durée prédéterminée Tcom, avec le chargeur intelligent 44 par l'intermédiaire du bus de communication 36, de sorte à permettre un échange de données entre le contrôleur 31 et le chargeur intelligent 44.

Avantageusement, le bus de communication 36 est un bus de communication haute vitesse, l'échange de données étant mis en œuvre à une vitesse comprise dans une plage s'étendant entre 200 kHz et 400 kHz, en particulier à une vitesse de 300 kHz.

Avantageusement, les données sont des données de type « PowerDelivery » de la norme « USB Power Delivery », également appelée « USB-PD », en particulier de la norme « USB Power Delivery 3.0 », également appelée « USB-PD 3.0 ».

En variante, les données échangées sont des données des données de configuration de l'actionneur électromécanique 11, ou des données de mise à jour des éléments logiciels de l'unité électronique de contrôle 15, ou des données de configuration de l'actionneur électromécanique 11 et de mise à jour des éléments logiciels de l'unité électronique de contrôle 15.

Lorsque la durée prédéterminée Tcom est écoulée, le contrôleur 31 met en œuvre une deuxième étape de commande 116 du circuit de charge 32, de sorte que le circuit de charge 32 charge la batterie rechargeable 18 avec une valeur d'intensité d'un courant de charge égale à une deuxième valeur d'intensité I_2, la deuxième valeur d'intensité I_2 étant strictement supérieure à la première valeur d'intensité I_1.

Avantageusement, la deuxième valeur d'intensité I_2 est égale à la valeur seuil d'intensité I_N du profil d'alimentation PDO déterminé. Par exemple, la deuxième valeur d'intensité I_2 est égale à 1,5A lorsque le profil d'alimentation PDO déterminé par l'étape 104 de détermination est le profil d'alimentation 15V/1,5A.

Lors de la deuxième étape de commande 116, le circuit de charge 32 est toujours connecté au chargeur intelligent 44 et alimenté par le chargeur intelligent 44 avec le profil d'alimentation PDO déterminé lors de l'étape de détermination 104. Ainsi, la batterie rechargeable 18 est chargée plus rapidement que pendant la durée prédéterminée Tcom, car le circuit de charge 32 charge la batterie rechargeable 18 avec une valeur d'intensité strictement supérieure à la valeur d'intensité chargeant la batterie rechargeable pendant la durée prédéterminée Tcom.

Avantageusement, la deuxième étape de commande 116 comprend, en outre, une sous-étape d'arrêt 1161 de charge de la batterie rechargeable 18, l'étape d'arrêt 1161 étant mise en œuvre par le circuit de charge 32 de sorte que le circuit de charge 32 arrête de charger la batterie rechargeable 18 avec la deuxième valeur d'intensité I_2 lorsque une valeur d'un niveau de charge de la batterie rechargeable 18 atteint ou dépasse une valeur seuil de charge.

Avantageusement, la deuxième étape de commande 116 comprend, en outre, une sous-étape de surveillance 1162, la sous-étape de surveillance 1162 étant mise en œuvre par le circuit de charge 32 suite à la sous-étape d'arrêt 1161, de sorte que, le circuit de charge 32 surveille la valeur du niveau de charge de la batterie rechargeable 18, et si la valeur du niveau de charge est strictement inférieure à la valeur seuil de charge, le circuit de charge 32 charge de nouveau la batterie rechargeable 18 avec la deuxième valeur d'intensité I_2.

Avantageusement, le procédé de commande comprend, en outre, une deuxième étape de détection 118 d'une déconnexion du chargeur intelligent 44 de l'actionneur électromécanique 11.

Avantageusement, la deuxième étape de détection 118 comprend au moins :
- une sous-étape de surveillance 1181 de la présence d'un signal d'alimentation VBUS sur le bus d'alimentation 34,
- au cours de la sous-étape de surveillance 1181, une sous-étape de détection 1182 de l'absence du signal d'alimentation VBUS sur le bus d'alimentation 34,
- en réponse à la détection de l'absence du signal d'alimentation VBUS, une sous-étape de communication 1183 du circuit de charge 32 au contrôleur 31 d'au moins une information indiquant l'absence du signal d'alimentation VBUS, et
- en réponse à la réception de l'information indiquant l'absence du signal d'alimentation VBUS, une sous-étape de commande 1184 du circuit de charge 32 de sorte que le circuit de charge 32 arrête de charger la batterie rechargeable 18.

Les sous-étape de surveillance 1181 et sous-étape de détection 1182 sont mises en œuvre par le circuit de charge 32, et la sous-étape de commande 1184 est mise en œuvre par le contrôleur 31.

Le procédé est avantageusement mis en œuvre à chaque fois qu'une connexion du chargeur intelligent 44 à l'actionneur électromécanique 11 via le connecteur 28, est détectée par le contrôleur 31.

Avantageusement, en cas de défaut électrique entre le chargeur intelligent 44 et le circuit de charge 32, par exemple en cas de court-circuit, ou de surintensité, le module de protection 40 commande l'ouverture de l'interrupteur 42, afin de protéger le circuit de charge 32.

Avantageusement, en cas de défaut électrique, ou de dysfonctionnement de la batterie rechargeable 18, par exemple, en cas de température trop élevée de la batterie rechargeable 18, le module de gestion 26 de la batterie rechargeable 18 interrompt la connexion entre le circuit de charge 32 et la batterie rechargeable 18, pour éviter d'endommager la batterie rechargeable 18.

Avantageusement, le contrôleur 31 comprend, en outre, des moyens matériels et logiciels adaptés pour commander le moteur électrique 16.

Avantageusement, le contrôleur 31 comprend en outre un module de réception d'ordres de commande, le module de réception d'ordres de commande pouvant être filaire ou sans-fil. L'ordre de déplacement provient par exemple d'une télécommande qu'un utilisateur manipule pour déplacer l'écran 2.

Attendre une durée prédéterminée pendant laquelle la batterie rechargeable 18 est chargée par un courant de chargement d'intensité le premier niveau d'intensité permet à l'étape de communication 114 d'avoir lieu sans risquer que les signaux échangés sur le bus de communication 36 ne soient perturbés, voire rendus illisibles, rendant la communication sur le bus de communication 36 impossible. Cela permet également d'utiliser une nappe FFC non blindée entre le connecteur 28, le circuit de charge 32 et le contrôleur 31, ce qui permet de faire baisser le coût de l'actionneur électromécanique 11 sans diminuer la qualité de la communication et sans interrompre totalement la charge de la batterie rechargeable 18 pendant la durée prédéterminée Tcom.

Toute caractéristique décrite pour un mode de réalisation ou une variante dans ce qui précède peut être mise en œuvre pour les autres modes de réalisation et variantes décrits précédemment, pour autant que techniquement faisable.

## Revendications

1. Procédé de commande d'un actionneur électromécanique (11) pour un dispositif d'occultation (3), l'actionneur électromécanique (11) comprenant au moins :
- une unité électronique de contrôle (15), et
- une batterie rechargeable (18),
l'unité électronique de contrôle (15) comprenant au moins :
- un contrôleur (31), le contrôleur (31) étant connecté à un chargeur (44) par l'intermédiaire d'un bus de communication (36), le chargeur (44) étant externe à l'actionneur électromécanique (11), et
- un circuit de charge (32), le circuit de charge (32) étant, d'une part, connecté à la batterie rechargeable (18) et au contrôleur (31), et, d'autre part, connecté au chargeur (44) par l'intermédiaire d'un bus d'alimentation (34),
le procédé étant mis en œuvre par l'unité électronique de contrôle (15), le procédé comprenant au moins :
- une étape de détection (102) d'une connexion du chargeur (44) à l'actionneur électromécanique (11),
- lorsqu'une connexion du chargeur (44) à l'actionneur électromécanique (11) est détectée, une étape de détermination (104) d'un profil d'alimentation (PDO) capable d'être fourni par le chargeur (44), le profil d'alimentation (PDO) étant **caractérisé par** une valeur seuil de tension (U_N) associée à une valeur seuil d'intensité (I_N), et
- une étape de commande (110) du chargeur (44), de sorte que le chargeur (44) alimente le circuit de charge (32) avec le profil d'alimentation (PDO) déterminé,
**caractérisé en ce que** le procédé comprend, en outre, au moins :
- une première étape de commande (112) du circuit de charge (32), de sorte que le circuit de charge (32) charge la batterie rechargeable (18) avec une valeur d'intensité d'un courant de charge égale à une première valeur d'intensité pendant une durée prédéterminée (Tcom), la première valeur d'intensité étant strictement inférieure à la valeur seuil d'intensité (I_N), et
- lorsque la durée prédéterminée (Tcom) est écoulée, une deuxième étape de commande (116) du circuit de charge (32), de sorte que le circuit de charge (32) charge la batterie rechargeable (18) avec une valeur d'intensité du courant de charge égale à une deuxième valeur d'intensité, la deuxième valeur d'intensité étant strictement supérieure à la première valeur d'intensité et inférieure ou égale à la valeur seuil d'intensité (I_N).

2. Procédé selon la revendication 1, comprenant, en outre, une étape de communication (114) avec le chargeur (44) par l'intermédiaire du bus de communication (36), de sorte à mettre en œuvre un échange de données entre le contrôleur (31) et le chargeur (44), l'étape de communication (114) étant mise en œuvre pendant la durée prédéterminée (Tcom).

3. Procédé selon la revendication 2, dans lequel, le bus de communication (36) étant un bus de communication haute vitesse, l'échange de données étant mis en œuvre à une vitesse comprise dans une plage s'étendant entre 200 kHz et 400 kHz, en particulier à une vitesse de 300 kHz.

4. Procédé selon la revendication 2 ou selon la revendication 3, dans lequel les données échangées entre le contrôleur (31) et le chargeur (44), lors de l'étape de communication (114), sont des données de type PowerDelivery du standard USB PowerDelivery.

5. Procédé selon l'une quelconque des revendications 1 à 4, dans lequel l'étape de détection (102) comprend au moins :
- une sous-étape de surveillance (1021) de la présence d'un signal d'alimentation (VBUS) sur le bus d'alimentation (34),
- au cours de la sous-étape de surveillance (1021), une première sous-étape de détection (1022) de la présence du signal d'alimentation (VBUS) sur le bus d'alimentation (34),
- en réponse à la détection de la présence du signal d'alimentation (VBUS), une première sous-étape de communication (1023) du circuit de charge (32) au contrôleur (31) d'au moins une information indiquant la présence du signal d'alimentation (VBUS), et
- en réponse à la réception de l'information indiquant la présence du signal d'alimentation (VBUS), une deuxième sous-étape de détection (1024), par le contrôleur (31), de la présence d'une valeur de résistance sur le bus de communication (36),
la sous-étape de surveillance (1021) et première sous-étape de détection (1022) étant mises en œuvre par le circuit de charge (32), et la deuxième sous-étape de détection (1024) étant mise en œuvre par le contrôleur (31).

6. Procédé selon l'une quelconque des revendications 1 à 5, dans lequel l'étape de détermination (104) du profil d'alimentation (PDO) comprend, en outre, au moins :
- une sous-étape de réception (106) d'une liste de profils d'alimentation (PDO_N), la liste de profils d'alimentation (PDO_N) étant émise par le chargeur (44) ; et
- une sous-étape de sélection (108) du profil d'alimentation (PDO) parmi la liste de profils d'alimentation (PDO_N),
les sous-étapes de réception (106) et de sélection (108) étant mises en œuvre par le contrôleur (31).

7. Procédé selon l'une quelconque des revendications précédentes, dans lequel, que lorsque le chargeur (44) est connecté à l'actionneur électromécanique (11), le chargeur (44) alimente automatiquement le circuit de charge (32) avec un profil d'alimentation minimum, le profil d'alimentation minimum étant distinct et strictement inférieur au profil d'alimentation (PDO) déterminé lors de l'étape de détermination (104), et dans lequel, que lorsque les étapes de détection (102) et de détermination (104) sont mises en œuvre, le circuit de charge (32) n'est pas commandé pour charger la batterie rechargeable (18).

8. Actionneur électromécanique (11) pour un dispositif d'occultation (3), l'actionneur électromécanique (11) comprenant au moins :
- une unité électronique de contrôle (15), et
- une batterie rechargeable (18),
l'unité électronique de contrôle (15) comprenant au moins :
- un contrôleur (31), le contrôleur (31) étant adapté pour être connecté à un chargeur (44) par l'intermédiaire d'un bus de communication (36), le chargeur (44) étant externe à l'actionneur électromécanique (11), et
- un circuit de charge (32), le circuit de charge (32) étant d'une part connecté à la batterie rechargeable (18) et au contrôleur (31), et d'autre part adapté pour être connecté au chargeur (44) par l'intermédiaire d'un bus d'alimentation (34),
**caractérisé en ce que** l'unité électronique de contrôle (15) est configurée pour mettre en œuvre les étapes du procédé selon l'une quelconque des revendications 1 à 7.

9. Actionneur électromécanique (11) selon la revendication 8, comprenant, en outre, un connecteur (28), le connecteur (28) comprenant au moins :
- une broche de communication (35), la broche de communication (35) étant connectée au contrôleur (31) par l'intermédiaire du bus de communication (36), et
- une broche d'alimentation (33), la broche d'alimentation (33) étant connectée au circuit de charge (32) par l'intermédiaire du bus d'alimentation (34).

10. Actionneur électromécanique (11) selon la revendication 9, dans lequel le connecteur (28) est un connecteur bus série universel de type C.

11. Actionneur électromécanique (11) selon l'une quelconque des revendications 8 à 10, l'actionneur électromécanique (11) comprenant, en outre, un moteur électrique (16), le moteur électrique (16) étant relié électriquement à la batterie rechargeable (18) de sorte à être alimenté en fonctionnement par la batterie rechargeable (18).

## Patentansprüche

1. Verfahren zum Steuern eines elektromechanischen Aktuators (11) für eine Verdunkelungsvorrichtung (3), wobei der elektromechanische Aktuator (11) mindestens umfasst:
- eine elektronische Steuereinheit (15), und
- eine wiederaufladbare Batterie (18), wobei die elektronische Steuereinheit (15) mindestens umfasst:
- ein Steuergerät (31), wobei das Steuergerät (31) mittels eines Kommunikationsbusses (36) mit einem Ladegerät (44) verbunden ist, wobei das Ladegerät (44) extern zu dem elektromechanischen Aktuator (11) ist, und
- ein Ladeschaltkreis (32), wobei der Ladeschaltkreis (32) einerseits mit der wiederaufladbaren Batterie (18) und mit dem Steuergerät (31) verbunden ist und andererseits mittels eines Versorgungsbusses (34) mit dem Ladegerät (44) verbunden ist, wobei das Verfahren durch die elektronische Steuereinheit (15) implementiert wird, wobei das Verfahren mindestens umfasst:
- einen Erkennungsschritt (102) einer Verbindung des Ladegeräts (44) mit dem elektromechanischen Aktuator (11),
- wenn eine Verbindung des Ladegeräts (44) mit dem elektromechanischen Aktuator (11) erkannt wird, einen Bestimmungsschritt (104) eines Leistungsprofils (PDO), das durch das Ladegerät (44) bereitgestellt werden kann, wobei das Leistungsprofil (PDO) durch einen Spannungsschwellenwert (U_N) gekennzeichnet ist, der einem Stromschwellenwert (I_N) zugeordnet ist, und
- einen Steuerschritt (110) des Ladegeräts (44), derart, dass das Ladegerät (44) den Ladeschaltkreis (32) mit dem bestimmten Leistungsprofil (PDO) versorgt,
**dadurch gekennzeichnet, dass** das Verfahren ferner mindestens umfasst:
- einen ersten Steuerschritt (112) des Ladeschaltkreises (32), derart, dass der Ladeschaltkreis (32) die wiederaufladbare Batterie (18) mit einem Stromwert eines Ladestroms gleich einem ersten Stromwert während einer vorbestimmten Dauer (Tcom) lädt, wobei der erste Stromwert strikt kleiner als der Stromschwellenwert (I_N) ist, und
- wenn die vorbestimmte Dauer (Tcom) abgelaufen ist, einen zweiten Steuerschritt (116) des Ladeschaltkreises (32), derart, dass der Ladeschaltkreis (32) die wiederaufladbare Batterie (18) mit einem Stromwert des Ladestroms gleich einem zweiten Stromwert lädt, wobei der zweite Stromwert strikt größer als der erste Stromwert und kleiner als oder gleich dem Stromschwellenwert (I_N) ist.

2. Verfahren nach Anspruch 1, ferner umfassend einen Kommunikationsschritt (114) mit dem Ladegerät (44) mittels des Kommunikationsbusses (36), derart, dass ein Datenaustausch zwischen dem Steuergerät (31) und dem Ladegerät (44) implementiert wird, wobei der Kommunikationsschritt (114) während der vorbestimmten Dauer (Tcom) implementiert wird.

3. Verfahren nach Anspruch 2, in dem der Kommunikationsbus (36) ein Hochgeschwindigkeits-Kommunikationsbus ist, der Datenaustausch mit einer Geschwindigkeit implementiert wird, die in einem Bereich enthalten ist, der sich zwischen 200 kHz und 400 kHz erstreckt, insbesondere mit einer Geschwindigkeit von 300 kHz.

4. Verfahren nach Anspruch 2 oder nach Anspruch 3, in dem die zwischen dem Steuergerät (31) und dem Ladegerät (44) während des Kommunikationsschritts (114) ausgetauschten Daten Daten vom Typ PowerDelivery des Standards USB PowerDelivery sind.

5. Verfahren nach einem beliebigen der Ansprüche 1 bis 4, in dem der Erkennungsschritt (102) mindestens umfasst:
- einen Überwachungsunterschritt (1021) des Vorhandenseins eines Versorgungssignals (VBUS) auf dem Versorgungsbus (34),
- im Laufe des Überwachungsunterschritts (1021), einen ersten Erkennungsunterschritt (1022) des Vorhandenseins des Versorgungssignals (VBUS) auf dem Versorgungsbus (34),
- als Antwort auf die Erkennung des Vorhandenseins des Versorgungssignals (VBUS), einen ersten Kommunikationsunterschritt (1023) von dem Ladeschaltkreis (32) an das Steuergerät (31) mindestens einer Information, die das Vorhandensein des Versorgungssignals (VBUS) angibt, und
- als Antwort auf den Empfang der Information, die das Vorhandensein des Versorgungssignals (VBUS) angibt, einen zweiten Erkennungsunterschritt (1024), durch das Steuergerät (31), des Vorhandenseins eines Widerstandswerts auf dem Kommunikationsbus (36), wobei der Überwachungsunterschritt (1021) und der erste Erkennungsunterschritt (1022) durch den Ladeschaltkreis (32) implementiert werden und wobei der zweite Erkennungsunterschritt (1024) durch das Steuergerät (31) implementiert wird.

6. Verfahren nach einem beliebigen der Ansprüche 1 bis 5, in dem der Bestimmungsschritt (104) des Leistungsprofils (PDO) ferner mindestens umfasst:
- einen Empfangsunterschritt (106) einer Liste von Leistungsprofilen (PDO_N), wobei die Liste von Leistungsprofilen (PDO_N) durch das Ladegerät (44) ausgesendet wird ; und
- einen Auswahlunterschritt (108) des Leistungsprofils (PDO) aus der Liste von Leistungsprofilen (PDO_N), wobei die Empfangs- (106) und Auswahlunterschritte (108) durch das Steuergerät (31) implementiert werden.

7. Verfahren nach einem beliebigen der vorhergehenden Ansprüche, in dem, wenn das Ladegerät (44) mit dem elektromechanischen Aktuator (11) verbunden ist, das Ladegerät (44) automatisch den Ladeschaltkreis (32) mit einem Mindestleistungsprofil versorgt, wobei das Mindestleistungsprofil von dem während des Bestimmungsschritts (104) bestimmten Leistungsprofil (PDO) verschieden und strikt geringer als dieses ist, und in dem, wenn die Erkennungs- (102) und Bestimmungsschritte (104) implementiert werden, der Ladeschaltkreis (32) nicht gesteuert wird, um die wiederaufladbare Batterie (18) zu laden.

8. Elektromechanischer Aktuator (11) für eine Verdunkelungsvorrichtung (3), wobei der elektromechanische Aktuator (11) mindestens umfasst:
- eine elektronische Steuereinheit (15), und
- eine wiederaufladbare Batterie (18), die elektronische Steuereinheit (15) umfassend mindestens:
- ein Steuergerät (31), wobei das Steuergerät (31) dafür ausgelegt ist, mittels eines Kommunikationsbusses (36) mit einem Ladegerät (44) verbunden zu werden, wobei das Ladegerät (44) extern zu dem elektromechanischen Aktuator (11) ist, und
- einen Ladeschaltkreis (32), wobei der Ladeschaltkreis (32) einerseits mit der wiederaufladbaren Batterie (18) und dem Steuergerät (31) verbunden ist, und andererseits dafür ausgelegt ist, mittels eines Versorgungsbusses (34) mit dem Ladegerät (44) verbunden zu werden, **dadurch gekennzeichnet, dass** die elektronische Steuereinheit (15) dafür konfiguriert ist, die Schritte des Verfahrens nach einem beliebigen der Ansprüche 1 bis 7 zu implementieren.

9. Elektromechanischer Aktuator (11) nach Anspruch 8, ferner umfassend einen Verbinder (28), wobei der Verbinder (28) mindestens umfasst:
- einen Kommunikationsstift (35), wobei der Kommunikationsstift (35) mittels des Kommunikationsbusses (36) mit dem Steuergerät (31) verbunden ist, und
- einen Versorgungsstift (33), wobei der Versorgungsstift (33) mittels des Versorgungsbusses (34) mit dem Ladeschaltkreis (32) verbunden ist.

10. Elektromechanischer Aktuator (11) nach Anspruch 9, in dem der Verbinder (28) ein Universal-Serial-Bus-Verbinder vom Typ C ist.

11. Elektromechanischer Aktuator (11) nach einem beliebigen der Ansprüche 8 bis 10, wobei der elektromechanische Aktuator (11) ferner einen Elektromotor (16) umfasst, wobei der Elektromotor (16) elektrisch mit der wiederaufladbaren Batterie (18) verbunden ist, sodass er im Betrieb durch die wiederaufladbare Batterie (18) versorgt wird

## Claims

1. A method for controlling an electromechanical actuator (11) for a concealment device (3), the electromechanical actuator (11) comprising at least:
- an electronic control unit (15), and
- a rechargeable battery (18), the electronic control unit (15) comprising at least:
- a controller (31), the controller (31) being connected to a charger (44) via a communication bus (36), the charger (44) being external to the electromechanical actuator (11), and
- a charging circuit (32), the charging circuit (32) being, on the one hand, connected to the rechargeable battery (18) and to the controller (31) and, on the other hand, connected to the charger (44) via a power supply bus (34), the method being implemented by the electronic control unit (15), the method comprising at least:
- a step of detecting (102) a connection between the charger (44) and the electromechanical actuator (11),
- when a connection of the charger (44) to the electromechanical actuator (11) is detected, a step of determining (104) a supply profile (PDO) capable of being supplied by the charger (44), the supply profile (PDO) being **characterised by** a voltage threshold value (U_N) associated with an amperage threshold value (I_N), and
- a step of controlling (110) the charger (44), so that the charger (44) supplies the charging circuit (32) with the determined supply profile (PDO), **characterised in that** the method further comprises at least:
- a first step of controlling (112) the charging circuit (32), so that the charging circuit (32) charges the rechargeable battery (18) with an amperage of a charging current equal to a first amperage for a predetermined duration (Tcom), the first amperage being strictly less than the amperage threshold value (I_N), and
- when the predetermined time (Tcom) has elapsed, a second step of controlling (116) the charging circuit (32), so that the charging circuit (32) charges the rechargeable battery (18) with an amperage of the charging current equal to a second amperage, the second amperage being strictly greater than the first amperage and less than or equal to the amperage threshold value (I_N).

2. The method according to claim 1, further comprising a step of communicating (114) with the charger (44) via the communication bus (36), so as to implement an exchange of data between the controller (31) and the charger (44), the communication step (114) being carried out for the predetermined duration (Tcom).

3. The method according to claim 2, wherein the communication bus (36) is a high-speed communication bus, the data exchange is implemented at a speed in a range between 200 kHz and 400 kHz, in particular at a speed of 300 kHz.

4. The method according to claim 2 or according to claim 3, wherein the data exchanged between the controller (31) and the charger (44), during the communication step (114), is data of the PowerDelivery type of the USB PowerDelivery standard.

5. The method according to any one of claims 1 to 4, wherein the detection step (102) comprises at least:
- a sub-step of monitoring (1021) the presence of a power supply signal (VBUS) on the power supply bus (34),
- during the monitoring sub-step (1021), a first sub-step (1022) of detecting the presence of the power supply signal (VBUS) on the power supply bus (34),
- in response to detecting the presence of the power supply signal (VBUS), a first sub-step (1023) of communicating from the charging circuit (32) to the controller (31) at least one item of information indicating the presence of the power supply signal (VBUS), and
- in response to receiving the information indicating the presence of the power supply signal (VBUS), a second sub-step (1024) of detecting, by the controller (31), the presence of a resistance value on the communication bus (36), the monitoring sub-step (1021) and first detection sub-step (1022) being implemented by the charging circuit (32), and the second detection sub-step (1024) being implemented by the controller (31).

6. The method according to any one of claims 1 to 5, wherein the step of determining (104) the supply profile (PDO) further comprises at least:
- a sub-step of receiving (106) a list of supply profiles, the list of supply profiles (PDO_N), being transmitted by the charger (44); and
- a sub-step of selecting (108) the supply profile (PDO) from the list of supply profiles (PDO_N), the reception (106) and selection (108) sub-steps being carried out by the controller (31).

7. The method according to any one of the preceding claims, wherein, when the charger (44) is connected to the electromagnetic actuator (11), the charger (44) automatically supplies the charging circuit (32) with a minimum supply profile, the minimum supply profile being distinct from and strictly lower than the supply profile (PDO) determined in the determination step (104), and wherein, when the detection (102) and determination (104) steps are carried out, the charging circuit (32) is not controlled to charge the rechargeable battery (18).

8. An electromechanical actuator (11) for a concealment device (3), the electromechanical actuator (11) comprising at least:
- an electronic control unit (15), and
- a rechargeable battery (18), the electronic control unit (15) comprising at least:
- a controller (31), the controller (31) being connected to a charger (44) via a communication bus (36), the charger (44) being external to the electromechanical actuator (11), and
- a charging circuit (32), the charging circuit (32) being, on the one hand, connected to the rechargeable battery (18) and to the controller (31) and, on the other hand, adapted to be connected to the charger (44) via a power supply bus (34), **characterised in that** the electronic control unit (15) is configured to implement the steps of the method according to any of claims 1 to 7.

9. The electromechanical actuator (11) according to claim 8, further comprising a connector (28), the connector (28) comprising at least:
- a communication pin (35), the communication pin (35) being connected to the controller (31) via the communication bus (36), and
- a power supply pin (33), the power supply pin (33) being connected to the charging circuit (32) via the power supply bus (34).

10. The electromechanical actuator (11) according to claim 9, wherein the connector (28) is a universal serial bus type C connector.

11. An electromechanical actuator (11) according to any one of claims 8 to 10, the electromechanical actuator (11) further comprising an electric motor (16), the electric motor (16) being electrically connected to the rechargeable battery (18) so as to be powered in operation by the rechargeable battery (18).
